# EUROPEAN PATENT APPLICATION

(11) **EP 4 246 737 A1**
(43) Date of publication of application: **20.09.2023**
(21) Application number: 22211787.1
(22) Date of filing: 06.12.2022
(51) Int. Cl.: H01R 13/527, H01R 13/504, H01R 13/533, H01R 43/18

(54) **ELECTRIC VEHICLE CHARGING CONNECTOR**

(30) Priority: 06.12.2021 US 202163286430 P
(71) Applicant: ABB E-mobility B.V., 2629 JG Delft (NL)
(72) Inventor: GARCIA FERRÉ, Francisco, Baden (CH); UGUR, Ali, Delft (NL); RAAIJMAKERS, Stefan Joannes, Delft (NL)
(74) Representative: Zimmermann & Partner Patentanwälte mbB

(57) **Abstract**

A charging connector is provided. The charging connector includes a body having a first body end and a second body end. The charging connector also includes a cable connected to the first body end. The cable houses at least one conductor. The charging connector also includes at least one contact positioned at the second body end and electrically coupled to the at least one conductor. The charging connector also includes a mating interface connected to the second body end. The mating interface has a shroud and at least one contact dome that encloses the at least one contact. The at least one contact dome is at least partially formed of a first material having a first flammability resistance, and the shroud is at least partially formed of a second material having a second flammability resistance. The first flammability resistance is higher than the second flammability resistance.

## Description

### CROSS-REFERENCE TO RELATED APPLICATIONS

This application claims priority to U.S. Provisional Patent Application No. 63/286,430, filed December 6, 2021, the disclosure of which is hereby incorporated herein by reference in its entirety.

### BACKGROUND

The field of the disclosure relates generally to electric vehicle charging connectors and, more particularly, to electric vehicle charging connectors that are both mechanically durable and resistant to fire.

Known connectors for electric vehicle (EV) charging use a direct current (DC) charging cable that charges the EV using a Combined Charging System (CCS) that complies with the IEC 61851-23 protocol and SAE J1772 standard. The charging cable typically includes DC conductors in combination with additional line conductors such as, for example, a Proximity Pilot (PP) line for supplying a PP signal, a Control Pilot (CP) line for supplying a CP signal and/or a Protective Earth (PE) line for supplying a PE signal.

At least some known EV charging connectors have a mating interface that couples to a vehicle charging interface. The connector mating interface houses electrical contacts, for example, the DC conductors, that deliver voltage to the EV. The proximity to high voltage creates a fire risk. A fire could be started by a self-catalytic phenomenon of local heating, small arc formation, erosion, melting and fire creation. This may happen, for example, in case of a low-quality crimp or poor connection with high contact resistance.

The charging interface is typically made entirely from a plastic material, e.g., glass fiber reinforced polyamides (e.g., PA6-GF30 or PA66-GF30), further comprising flame-retardant additives to obtain a flammability classification V0. V0 is the highest classification for flame retardancy. The use of VO-rated materials for electrical applications is known in various industries, including e-Mobility. The use of VO-rated materials is an effective means for minimizing the likelihood of electrical fires, especially at the connector mating interface. Other lower than V0 material flammability ratings include V1, V2 and HB. The desired flammability rating is achieved by adding amounts of flame-retardant additives needed to achieve the desired flammability rating.

In addition to fire risk, known EV charging connectors are also at risk of mechanical damage, often as a result of misuse or vandalism. The mating interface is particularly susceptible to mechanical damage. The mating interface often comes in contact with the ground when the charging connector is dropped by the user or otherwise not relocated in the storage housing when use is completed.

The mechanical damage caused to the mating interface of EV charging connectors may be exacerbated by the use of VO-rated material. While the use of flame-retardant additives improves the flammability properties of the material, the mechanical strength is reduced as a result. When additives, such as antimony trioxide (Sb2O3) are introduced in the material to increase the flammability resistance, the additives disrupt the polymeric chains, creating weak points in the material and decreasing the associated mechanical properties. The mechanical durability may be enhanced by the use of relatively strong mechanical material having a relatively low fire resistance, e.g., an HB-rated material, in lieu of a VO-rated material. For example, the fracture toughness of a V0-rated PA6-GF30 could be in the range of 60-80 kJ/m2, as defined by a Charpy test done as per ISO 179/1eU. For an HB-rated PA6-GF30, however, a fracture toughness value cannot even be defined, as there is no break of the test sample during the test procedure without a pre-existing notch. If a notch exists, values can be defined in the range of 70-90 kJ/m2, which is two orders of magnitude higher than pre-notched sample of a VO-rated material.

However, if a mating interface is formed entirely of an HB-rated material, the risk of electrical fire would be unacceptable due to the relatively low resistance to fire of the HB-rated material. As a result, it is difficult to realize both mechanical durability and fire resistance in current EV charging connectors. Higher flammability resistance results in lower mechanical durability, and lower flammability resistance results in enhanced mechanical durability. HB-rated material is therefore not used at all in known EV charging connectors. Rather, the mechanical durability of the EV charging connector is sacrificed to improve the fire resistance of the material.

Accordingly, there is a need to provide an EV charging connector that overcomes the challenges in the art to include a connector mating interface that is both mechanically durable and resistant to fire.

### BRIEF DESCRIPTION

In one aspect, a charging connector is provided. The charging connector includes a body having a first body end and a second body end. The charging connector also includes a cable connected to the first body end. The cable houses at least one conductor. The charging connector also includes at least one contact positioned at the second body end and electrically coupled to the at least one conductor. The charging connector also includes a mating interface connected to the second body end. The mating interface has a shroud and at least one contact dome that encloses the at least one contact. The at least one contact dome is at least partially formed of a first material having a first flammability resistance, and the shroud is at least partially formed of a second material having a second flammability resistance. The first flammability resistance is higher than the second flammability resistance.

In another aspect, a mating interface for an electric vehicle charging connector is provided. The mating interface includes a front surface and a shroud extending outwardly from the front surface. The shroud defines an interior shroud volume. The mating interface also includes at least one contact dome extending outwardly from the front surface within the interior shroud volume. The at least one contact dome is adapted to enclose at least one electrical contact of the electrical vehicle charging connector. The at least one contact dome is at least partially formed of a first material having a first flammability resistance, and the shroud is at least partially formed of a second material having a second flammability resistance. The first flammability resistance is higher than the second flammability resistance.

### BRIEF DESCRIPTION OF THE DRAWINGS

FIG. 1 is a perspective view of an EV charging connector;
FIG. 2 is a perspective view of a mating interface for use in the EV charging connector shown in FIG. 1;
FIG. 3 is a partial section view of a prior art mating interface formed completely of VO-rated material;
FIG. 4 is a partial sectional view of an exemplary mating interface formed of a combination of VO-rated and HB-rated materials;
FIG. 5 is a partial sectional view of a first alternative exemplary mating interface formed of a combination of VO-rated and HB-rated materials;
FIG. 6 is a partial sectional view of a second alternative exemplary mating interface formed of a combination of VO-rated and HB-rated materials;
FIG. 7 is a partial sectional view of a third alternative exemplary mating interface formed of a combination of VO-rated and HB-rated materials; and
FIG. 8 is an isolated perspective view of a fourth alternative exemplary mating interface formed of a combination of VO-rated and HB-rated materials.

### DETAILED DESCRIPTION

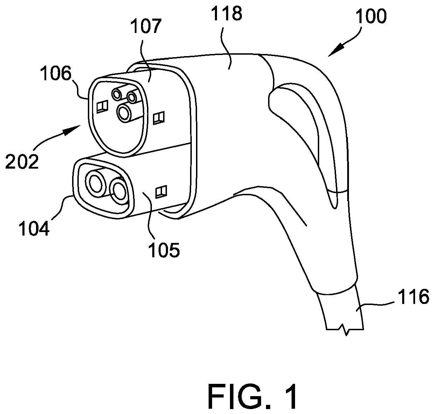

FIG. 1 is a perspective view of an electric vehicle (EV) charging connector 100 that couples a power supply to a charging interface on an electric vehicle (not shown) and enables the delivery of charging current to the electric vehicle. EV charging connector 100 has a body 118 that is at one end connected to electrical vehicle supply equipment (EVSE) via a cable 116 partially shown in FIG. 1. The opposite end of body 118 is connected to a mating interface 202 that serves as a protective enclosure for electrical terminals (or electrical contacts, or "contacts") of charging connector 100. In the example embodiment, EV charging connector 100 is a Combined Charging System (CCS) connector type for charging electric vehicles via high-voltage direct current (DC). The terminal interface of the EV charging connector may configured according to or derived from an IEC Type 1 or an IEC Type 2 connector.

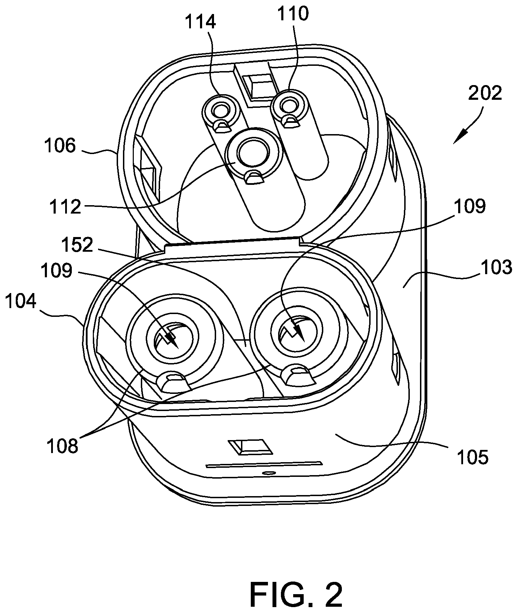

FIG. 2 is a perspective view of a mating interface 202. Mating interface 202 includes a front surface 103. As shown therein, mating interface 202 includes two shrouds 104, 106. The shrouds are located side-by-side along surface 103 of at the mating interface 202. Each shroud 104, 106 includes a continuous wall 105, 107, respectively. The walls 105, 107 extend outwardly from front surface 103 such that the continuous walls 105, 107 each define an enclosed interior shroud volume. Protective domes that house the electrical contacts of connector 100 are located in the interior shroud volumes. Shroud 104 surrounds a pair of DC domes 108. Shroud 106 surrounds a Proximity Pilot (PP) dome 110, a Protective Earth (PE) dome 112, and a Control Pilot (CP) dome 114. The PP, PE and PC domes are arranged in a triangular pattern within the volume defined by wall 107. The configuration of mating interface 202 is not limited to the illustrated embodiment, and may include any number of shrouds and/or domes as appropriate for the type of connector used as EV charging connector 100 to enable mating interface 202 to function as described herein.

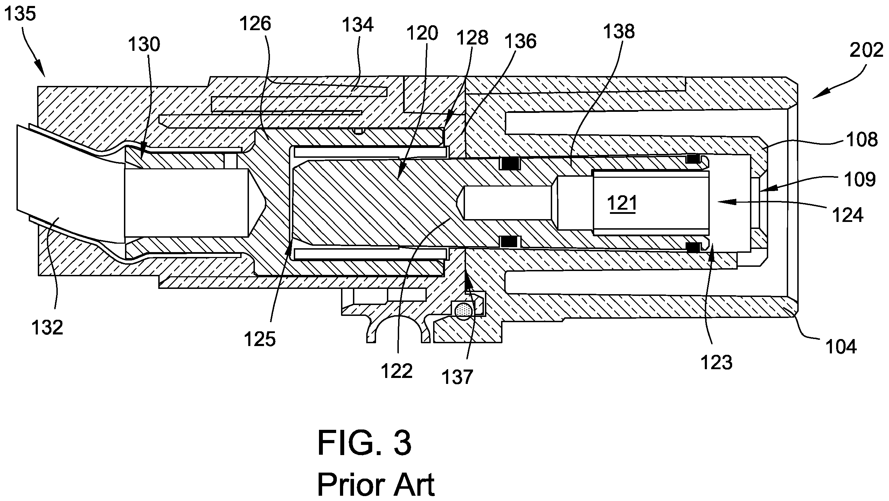

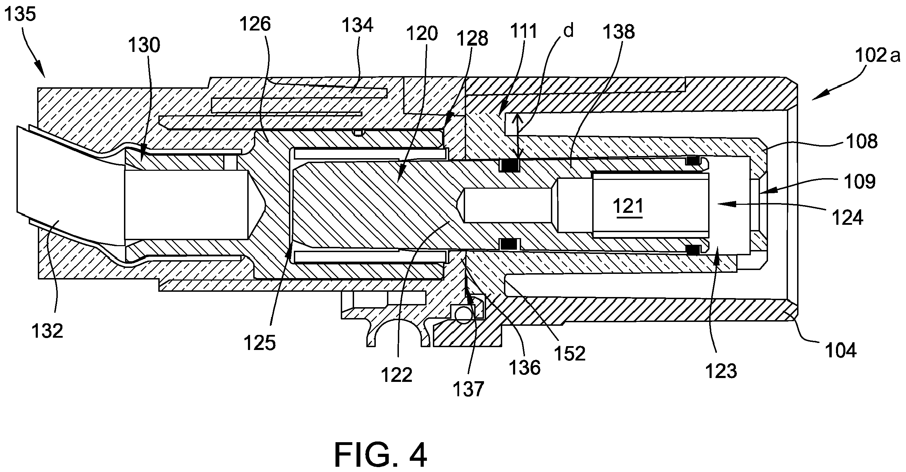

When mating interface 202 is connected to connector body 118, each of the domes encloses a contact of connector 100. That is, each of the domes at least partially covers or surrounds an exposed portion of a contact of connector 100 extending outwardly from the end of the body 118 that is connected to the mating interface 202. For example, as shown in FIG. 3, the DC dome 108 encloses a DC contact 120. This structure is also shown in FIGS. 4-7. One of the DC contacts 120 is a positive terminal and the other is a negative terminal. The DC domes and associated contacts are used for DC charging. PP dome 110 encloses a PP contact that provides a signal to a control system of the EV that indicates the EV is connected to electrical vehicle supply equipment (EVSE). PE dome 112 encloses a PE ground contact that connects via a ground line to the ground of the EV. CP dome 114 encloses a CP contact that provides data communication signals between the EV and the EVSE.

FIG. 3 is a partial sectional view of a prior art mating interface 202. As shown in FIG. 3, a DC contact 120 is enclosed by DC dome 108. Shroud 104 surrounds DC contacts 120 and DC domes 108. While the structure and features relating to DC domes 108 are described in detail herein, it should be understood that the structure and features of domes 108 described herein apply similarly to portions of mating interface 202 that enclose other electrical contacts of EV charging connector, e.g., shroud 106 and domes 110, 112, 114.

DC contact 120 includes a cylindrical body 122 with a terminal contact end 123 and a coupler contact end 125. An opening 124 is formed at the terminal end 123 of DC contact 120. The opening 124 provides access to contact member slot 121 that is adapted to receive a corresponding electrical contact or pin (not shown) when EV charging connector is plugged into the EV charging interface. DC dome 108 includes an opening 109 that allows access to the opening 124 and slot 121 of DC contact 120.

The coupler contact end 125 of the DC contact 120 is electrically connected to electrical coupler 126. Electrical coupler 126 receives the coupler contact end 125 that is seated in the first end 128 of coupler 126. Coupler contact end 125 contacts the coupler 126 at the first coupler end 128 to produce the desired electrical connection therebetween. As a result, the contacts 120 are in turn electrically connected to a conductor 132 (e.g., a copper wire) at a second coupler end 130. The contact 120 and coupler 126 are each formed of an electrically conductive, metallic material configured to carry an electrical current, thereby providing an electrical connection between conductor 132 and the electrical contact at the EV charging interface.

The coupler 126 is located within a contact holder 134. The contact holder 134 may support the coupler 126 and the DC contact 120 electrically coupled to the coupler 126. Contact holder 134 defines a central passageway (not shown) extending from a first holder end 135 to a second holder end 137. Contact holder 134 includes a collar 136 at the second holder end 137. The collar 136 extends radially inward to enclose coupler 126 within contact holder 134. As shown in FIG. 3, an exposed portion 138 of cylindrical DC contact body 122 extends outwardly beyond the collar 136 at second holder end 137 of the contact holder 134. The exposed portion 138 of cylindrical body 122 therefore remains uncovered by contact holder 134. DC dome 108 encloses the exposed portion 138 of cylindrical body 122.

Because the contact holder 134 is proximate the current carrying conductor 132, coupler 126 and contact 120, the contact holder 134 is formed of VO-rated material to maximize flame retardant capabilities and limit the risk of fire during use. For example, contact holder 134 may be formed of a thermoplastic material such as a polyamide plastic (i.e., nylon) material. Other suitable thermoplastic materials include polybutylene terephthalate (PBT) and polycarbonates. In some embodiments, the thermoplastic material is reinforced by glass fiber, such as PA6 or PA66 nylon containing 30% glass fiber (i.e., PA6-30GF or PA66-30GF). The thermoplastic material also contains a suitable concentration of flame-retardant additives to increase the fire resistance of the thermoplastic material. The one or more flame-retardant additives provided in the thermoplastic material may include, for example, antimony trioxide (Sb2O3).

As shown in FIG. 3, because the conductor 132, coupler 126 and contact 120 are electrically charged, to minimize risk of fire, the dome 108, and shroud 104 are made entirely of a VO-rated material. The VO-rated material forming the dome 108 and shroud 104 may include the thermoplastic materials containing a suitable concentration of flame-retardant additives as described above for contact holder 134.

The VO-rated material used to form dome 108, and shroud 104 in the prior art mating interface 202 shown in FIG. 3 are compliant with the IEC 62196 and UL 2251 standards. These standards establish the standard requirements for CCS connectors. In part, the standards requirements define connector performance expectations relative to flammability/resistance to fire. The connector flammability characteristics are directly determined by the properties of the materials used to house the electrical contacts. Due to its relatively high flammability resistance, VO-rated material typically exceeds the standard requirements, and is therefore used.

To meet the flammability resistance requirements of the UL 2251 standard, however, forming dome 108 and/or shroud 104 entirely of VO-rated material is not strictly needed. Rather, forming all or part of dome 108 and/or shroud 104 of an HB-rated material is acceptable (clause 8.1.3). Further, section 8.2 sets forth that HB-rated material may be used in situations where the where the thickness of the walls of the part under examination, or the air distance between the HB-rated material part and the electrical contacts meets the requirements of 8.2. HB-rated material has a higher mechanical strength than VO-rated material. HB-rated material has a lower flammability resistance than VO-rated material. The relatively higher flammability resistance of VO-rated material may be attributed to flame-retardant additives included in the VO-rated material.

The IEC 62196 standard, meanwhile, does not include a specific requirement for flammability. However, clause 29 includes requirements in terms of resistance to fire, which are measured by a glow wire test. The test is done at 650°C for parts that do not keep electrical contacts in position, and at 850°C for parts that do keep electrical contacts in position (and that are, therefore, in direct contact with the electrical contacts). HB-rated materials would be able to pass a test at 650°C, but passing the test at 850°C would be certainly more difficult, if at all possible.

In sum, an HB-rated material may be used to form dome 108 and/or shroud 104 as per the UL2251 and IEC 62196 standards, provided certain conditions are met.

Turning to the exemplary embodiments, FIG. 4 is a partial sectional view of an exemplary mating interface 102a. All elements and components previously described for mating interface 202 shown in FIG. 3 are shown in FIG. 4 for the mating interface 102a. Like elements and components are indicated using the same reference numerals. Additionally, in the exemplary embodiment, mating interface 102a is formed of a combination of VO-rated and HB-rated materials to combine the relatively higher mechanical strength of HB-rated material with the relatively higher flammability resistance of VO-rated material to provide an improved mating interface. In particular, shroud 104 of mating interface 102a is formed of an HB-rated material. DC dome 108, which encloses exposed portion 138 of cylindrical body 122, is formed of a VO-rated material. The VO-rated material used to form dome 108 may include the thermoplastic materials containing a suitable concentration of flame-retardant additives as described above. The multiple material composition of mating interface 102a may be achieved via a two-step injection molding process, where a first shot is made with one material, a second shot is made with a second material, and so on.

The HB-rated material that forms shroud 104 may include a thermoplastic material that has the same or a compatible base chemical composition as the thermoplastic VO-rated material used to form dome 108. This may advantageously provide suitable chemical adhesion at an injection mold interface 111 between the two materials. For example, the base chemical composition of the HB-rated material may be a thermoplastic material, such as those described above with respect to the VO-rated material. Unlike the VO-rated material, however, the HB-rated material suitably contains little or no flame-retardant additives, so as to be classified HB.

The mating interface 102a shown in FIG. 4 and described above meets all the standard requirements set forth in the UL2251 and IEC 62196 standards. The HB-rated material forming shroud 104 is spaced a minimum distance "d" from exposed portion 138 of cylindrical body 122, which distance d meets or exceeds the minimum distance required by UL2251 and IEC 62196 standards. Referring back to FIGS. 1 and 2, shroud 104 is an exposed component of mating interface 102a. Using HB-rated material to form shroud 104 provides mechanical durability to a portion of mating interface 102a that may be damaged by mechanical impact. Thereby, problems associated with damage to the mating interface 102a may be mitigated as the HB-rated material has a relatively higher mechanical strength. In some embodiments, shroud 106 may similarly be formed from an HB-rated material.

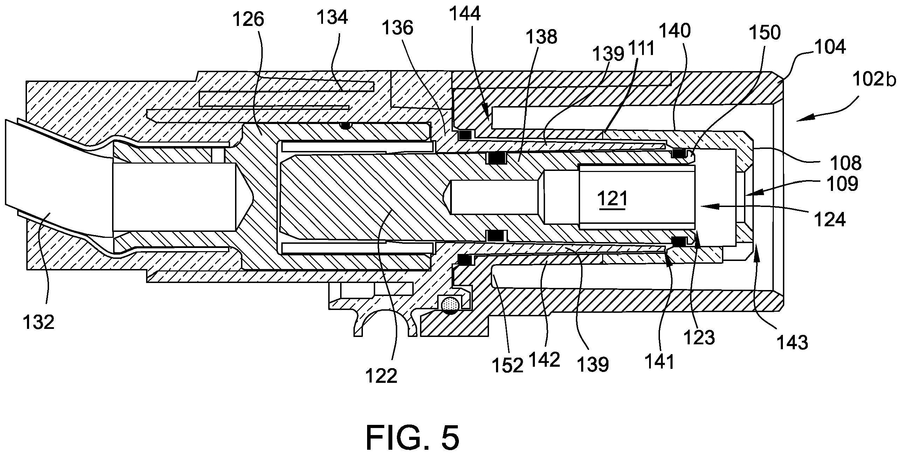

FIG. 5 is a partial sectional view of a first alternative exemplary mating interface 102b. The mating interface 102b of the first alternative embodiment includes all the elements and components of the mating interface 202 shown in FIGS. 3 and the mating interface 102a shown in FIG. 4. Like elements and components are indicated using the same reference numerals. Additionally, as shown in FIG. 5, contact holder 134 of the mating interface 102b includes wall 139 extending axially and outwardly from collar 136. The wall 139 tapers inwardly as the wall 139 extends axially toward end 141 opposite collar 136. The wall 139 terminates at a minimum wall thickness at end 141. The wall 139 is interposed between contact 120 and dome 108 such that wall 139 at least partially encloses exposed portion 138 of cylindrical body 122. As described above, the entirety of contact holder 134, including wall 139, is made from VO-rated material. A portion 150 of cylindrical body 122 may extend beyond end 141 to terminal contact end 123, and the portion 150 remains exposed (i.e., is not enclosed by the wall 139). When mating interface 102b is connected to connector 100, DC dome 108 encloses wall 139 and the remaining exposed portion 150 of cylindrical body 122.

The wall 139 thereby provides an electrically insulating layer of relatively high fire-resistant material interposed between cylindrical body 122 and DC dome 108. DC dome 108 may therefore suitably be formed at least partially of a combination of VO-rated material and HB-rated material.

As shown in FIG. 5, DC dome 108 include a first dome portion 140 at a distal end 143 proximate to the terminal contact end 123 of DC contact 120 that is formed of a VO-rated material. DC dome 108 also includes a second dome portion 142 at a proximal end 144 that is formed of a HB-rated material. The first dome portion 140 and second dome portion 142 are joined at injection mold interface 111. Injection mold interface 111 is located between distal end 143 and proximal end 144 of dome 108. The first dome portion 140 extends from distal end 143 to injection mold interface 111 and completely encloses remaining exposed portion 150 of cylindrical body 122. As shown in FIG. 5, first portion 140 extends beyond end 141 of wall 139 so as to partially overlap wall 139. In other embodiments, first portion 140 may only extend to end 141 of wall 139 (i.e., injection mold interface 111 is located substantially adjacent to end 141 of wall 139). The second portion 142 extends from injection mold interface 111 to proximal end 144 of DC dome 108. As shown in FIG. 5, shroud 104 is formed entirely of HB-rated material in mating interface 102b. Similar material combinations may be used for both DC domes 108 and domes 110, 112, 114, with the remaining portions of mating interface 102b being formed of HB-rated material.

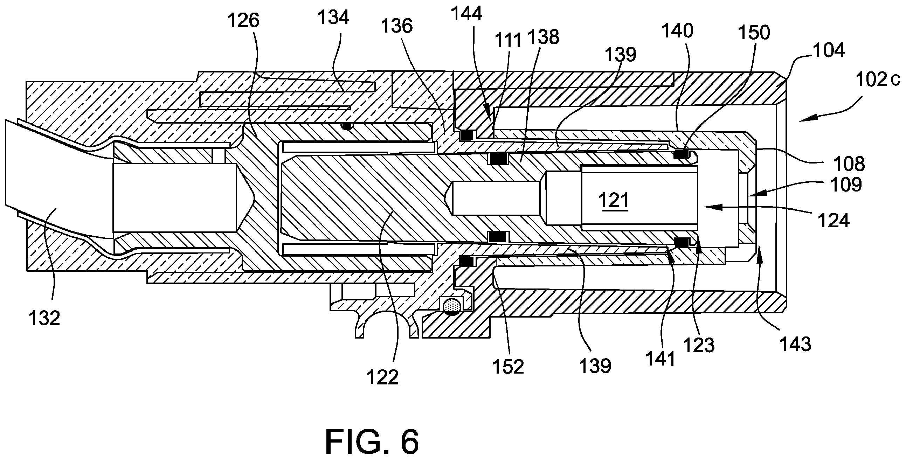

FIG. 6 is a partial sectional view of a second alternative exemplary mating interface 102c. The mating interface 102c of the second alternative embodiment includes all the elements and components of the mating interface 102b shown in FIG. 5. Like elements and components are indicated using the same reference numerals. In the mating interface 102c, injection mold interface 111 is located substantially at proximal end 144 of dome 108 such that dome 108 is entirely or substantially entirely first portion 140 (i.e., dome 108 is formed entirely or substantially entirely of VO-rated material). In this embodiment, shroud 104 is entirely formed of HB-rated material. Similar material combinations may be used for both DC domes 108 and domes 110, 112, 114, with the remaining portions of mating interface 102c (e.g., front surface 103) being formed of HB-rated material.

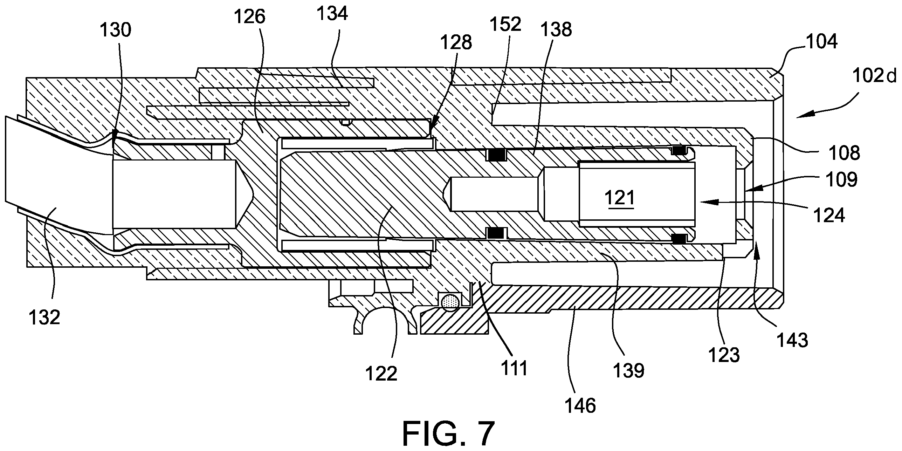

FIG. 7 is a partial sectional view of a third alternative exemplary mating interface 102d. Like elements and components of the mating interface 102d as the mating interface 202 and mating interfaces 102a-c shown respectively in FIGS. 3-6 are indicated in FIG. 7 using the same reference numerals. As shown in FIG. 7, contact holder 134 and mating interface 102d may be a unitary combined part, such that wall 139 and DC dome 108 form a single structure (i.e., the contact holder 134 is integrally formed with the DC dome 108). Wall 139 and dome 108 enclose exposed portion 138 of cylindrical body 122 that extends beyond end 128 of coupler 126. In this embodiment, the DC dome 108 and contact holder 134 may suitably be formed of VO-rated material. A portion 152 of front surface 103 of mating interface 102d that is surrounded by shroud 104 is also formed of V0-rated material. Alternatively, the portion 152 of front surface 103 may be formed of HB-rated material. Shroud 104 may be formed of a combination of HB-rated and VO-rated material. For example, as shown in FIG. 7, shroud 104 may have a portion 146 that is formed of an HB-rated material, while the remaining portion of shroud 104 is formed of a VO-rated material. Portion 146 may be a portion of shroud 104 that is at the greatest risk of mechanical impact. For example, as shown in FIG. 7, portion 146 may extend along a bottom of shroud 104 relative to mating interface 102d. Similar material combinations may be used for both shrouds 104 and 106, with each of the domes 108, 110, 112, and 114 being a single structure integral with a respective contact holder.

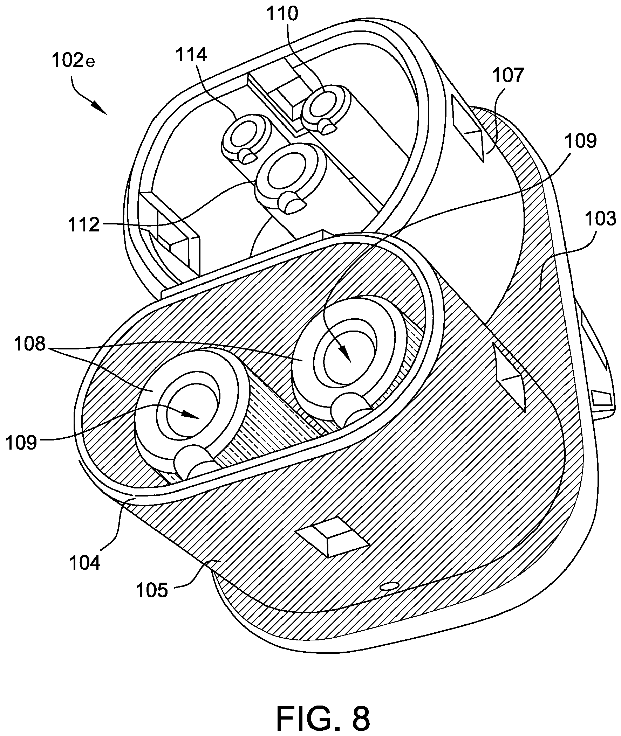

FIG. 8 is an isolated perspective view of a fourth alternative exemplary mating interface 102e. The mating interface 102e may include all the elements and components of the mating interface 102a-c shown in FIGS. 4-6, with the domes 108 formed as a separate component from contact holder 134. Alternatively, the mating interface 102e may include all the elements and components of the mating interface 102d shown in FIG. 7, with the domes 108 formed integral with a respective contact holder 134 as a unitary combined part. As shown in FIG. 8, the domes 108 are each at least partially formed of a VO-rated material, and the shroud 104 is formed of a HB-rated material. The front surface 103 of mating interface 102e is also at least partially formed of an HB-rated material. In these embodiments, the portion 152 of front surface 103 that is surrounded by shroud 104 may be formed of a VO-rated material (as shown in FIG. 4) or may be formed of an HB-rated material (as shown in FIGS. 5 and 6). Alternatively, the portion 152 of front surface 103 may be formed of a combination of VO-rated material and HB-rated material (not shown). The domes 108 of mating interface 102e shown in FIG. 8 may be completely formed of a VO-rated material (as shown in FIGS. 4, 6, and 7) or may be formed from a combination of VO-rated material and HB-rated material (as shown in FIG. 5).

The above-described charging connectors thus provide technical advantages by improving the mechanical strength of regions of the charging connector that are prone to mechanical damage while at the same time satisfying standard requirements related to flammability resistance of the connector. More particularly, the charging connectors described herein include a mating interface that encloses electrical contacts of the connector which is designed such that certain regions include VO-rated material having flame-retardant additives and certain regions include HB-rated material to optimize the mechanical strength of the connector in areas that are prone to damage via mechanical impact.

As used herein, the terms "about," "substantially," "essentially" and "approximately" when used in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

When introducing elements of the present disclosure or the embodiment(s) thereof, the articles "a," "an," "the," and "said" are intended to mean that there are one or more of the elements. The terms "comprising," "including," "containing," and "having" are intended to be inclusive and mean that there may be additional elements other than the listed elements. The use of terms indicating a particular orientation (e.g., "top," "bottom," "side," etc.) is for convenience of description and does not require any particular orientation of the item described.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A charging connector comprising:
a body having a first body end and a second body end;
a cable connected to the first body end, wherein the cable houses at least one conductor;
at least one contact positioned at the second body end and electrically coupled to the at least one conductor; and
a mating interface connected to the second body end, the mating interface having a shroud and at least one contact dome that encloses the at least one contact, wherein the at least one contact dome is at least partially formed of a first material having a first flammability resistance, and the shroud is at least partially formed of a second material having a second flammability resistance, wherein the first flammability resistance is higher than the second flammability resistance.

2. The charging connector according to Claim 1, wherein the second material has a higher mechanical strength than the first material.

3. The charging connector according to Claim 1 or 2, wherein the at least one contact dome has a first dome portion formed of the first material and a second dome portion formed of the second material.

4. The charging connector according to any one of the preceding claims, further comprising at least one contact holder that supports the at least one contact, the at least one contact dome of the mating interface at least partially enclosing the at least one contact holder,
wherein the at least one contact holder is preferably formed of the first material.

5. The charging connector according to Claim 4, wherein the at least one contact has an exposed portion at a terminal contact end, the exposed portion extending outwardly from the at least one contact holder, and wherein the at least one contact dome has a first dome portion at a distal dome end and a second dome portion at a proximal dome end, the first dome portion enclosing the exposed portion, the at least one contact holder being interposed between the at least one contact and the second dome portion,
wherein, preferably, the first dome portion is formed of the first material and the second dome portion is formed of the second material.

6. The charging connector according to any one of the preceding claims, further comprising at least one contact holder that supports the at least one contact, the at least one contact holder being integrally formed with the at least one contact dome of the mating interface.

7. The charging connector according to any one of the preceding claims, wherein the first material and the second material each comprise a thermoplastic material selected from the group consisting of polyamide plastics, polycarbonate plastics, and polybutylene terephthalate, and/or
the first material and the second material each comprise a polyamide plastic selected from the group consisting of nylon 6 and nylon 6,6.

8. The charging connector according to any one of the preceding claims, wherein the first material further comprises flame-retardant additives.

9. The charging connector according to any one of the preceding claims, wherein the shroud has a first portion formed of the first material and a second portion formed of the second material,
wherein, preferably, the second portion of the shroud extends along a bottom of the shroud relative to the mating interface.

10. The charging connector according to any one of the preceding claims, wherein the charging connector is an electric vehicle charging connector.

11. The charging connector according to Claim 10, wherein the electric vehicle charging connector is a Combined Charging System connector.

12. The charging connector according to any one of the preceding claims, wherein the first material is a VO-rated material, and / or wherein the second material is an HB-rated material.

13. A mating interface for an electric vehicle charging connector, the mating interface comprising:
a front surface;
a shroud extending outwardly from the front surface and defining an interior shroud volume; and
at least one contact dome extending outwardly from the front surface within the interior shroud volume, the at least one contact dome adapted to enclose at least one electrical contact of the electrical vehicle charging connector;
wherein the at least one contact dome is at least partially formed of a first material having a first flammability resistance, and the shroud is at least partially formed of a second material having a second flammability resistance, wherein the first flammability resistance is higher than the second flammability resistance.

14. The mating interface according to Claim 13, wherein the second material has a higher mechanical strength than the first material.

15. The mating interface according to Claim 13 or 14, wherein the first material is a VO-rated material and the second material is an HB-rated material.
